Europäisches Patentamt

European Patent Office

Office européen des brevets

(19)

(11) Publication number: **0 112 018**

A1

(12)

# EUROPEAN PATENT APPLICATION

(21) Application number: **83306729.1**

(22) Date of filing: **04.11.83**

(51) Int. Cl.³: **B 22 C 7/06**
**B 22 C 9/10, B 22 C 9/12**

(30) Priority: **08.11.82 JP 194761/82**

(43) Date of publication of application:
**27.06.84 Bulletin 84/26**

(84) Designated Contracting States:
**DE FR GB**

(71) Applicant: **HODOGAYA CHEMICAL CO., LTD.**
**4-2, Toranomon 1 Chome Minato-ku**
**Tokyo(JP)**

(72) Inventor: **Maruyama, Kazuo**
**3-35, Suehiro-3-chome**
**Kawaguchi-shi(JP)**

(72) Inventor: **Okuyama, Shin**
**22-1, Higashiterao-4-chome**
**Tsurumi-ku Yokohama(JP)**

(72) Inventor: **Watanabe, Haruo**
**24-13, Kamiya-3-chome**
**Kita-ku Tokyo(JP)**

(72) Inventor: **Hashimoto, Shigeki**
**309, Mineokacho-2-chome**
**Hodogaya-ku Yokohama(JP)**

(74) Representative: **Jones, Alan John et al,**
**CARPMAELS & RANSFORD 43 Bloomsbury Square**
**London, WC1A 2RA(GB)**

(54) **Mesh type vent for use in molds.**

(57) A mesh type vent for use in molds which is made from polyphenylene sulfide resin composition containing polyphenylene sulfide resin and at least one member selected from the group consisting of inorganic fibers, inorganic fillers and organic high molecular compounds.

EP 0 112 018 A1

## MESH TYPE VENT FOR USE IN MOLDS

The present invention relates to a mesh type vent for use in molds which is produced from a polyphenylene sulfide resin (hereinafter to be abbreviated to a PPS resin) composition.

In production of sand molds for castings at foundries, there have recently been employed molding processes, for example, the carbon dioxide process, the Iso-cure process, the Hardox process or the like wherein sand molds are cured in a short period of time together with various binders for castings, for example, a sodium silicate, a phenol-urethane resin, a furan resin and the like by blowing various gases into the sand molds. In these molding processes, curing gases such as carbon dioxide, triethylamine, sulfur dioxide and the like are used depending upon the type of binder to be used. These gases and binders have a variety of properties and exhibit characteristics widely ranging from acidity to a alkalinity. The binders for coatings have very strong adhesion as their general characteristics. Generally in production of sand molds for castings, a sand and a predetermined binder are uniformly kneaded by a mixer or the like and thereafter the resulting mixture is charged into a metal or wooden mold by hand or blown into the mold together with air. At this stage, the sand is not cured yet. Then, a curing gas fit for the binder used is blown thereinto and passed through the sand to cure the sand in a short period of time. In order to perform the curing operation in a time span as short as possible, it is necessary that the areas or positions of gas inlets and outlets relative to sand mold be designed so that effective curing can be achieved. Further, the sand must not go out of the metal or wooden mold through the gas inlets and outlets when the gas is taken in or evacuated. Accordingly, as the gas inlets and outlets, namely, gas vents, mesh type vents having a mesh about same as or smaller than the diameter of the sand used are most desirable. In addition, the vents must be made from a material with which clogging of mesh due to the binder and the like is less. Furthermore, the vents used for production of sand molds for castings are required to have chemical resistance and releasability from the mold, to have a mesh structure giving a large gas-passing area and to be low-priced.

Meanwhile, at factories producing molded foamed polystyrene, pellets of a foaming resin are allowed to foam in a metal mold to obtain a desired foamed product. More specifically, a predetermined amount of a foaming resin in pellet form is placed in a metal mold and a steam or a hot air of 100° to 150°C is blown into the mold, whereby the resin is allowed to foam into a desired form. At this time, the blown steam, a generated gas and the like must be discharged from the metal mold. For this purpose, vents for gas introduction and evacuation need be attached to the metal mold as in the case of production of sand molds for castings.

Currently in metal molds for production of sand molds by the use of a curing gas or in metal molds for production of foamed polystyrene, slit type vents made from iron or brass are mainly used. Being made from a metal, these vents are weak to acids, alkalis and water causing rust and consequently staining molded products. Thus, the vents have drawbacks in their use and also in own durability. Besides, to the vents adhere a binder for castings or a foamed resin and a long time is taken for cleaning the vents, which reduces work efficiency largely.

Separately from the above metallic vents, as a plastic vent, a slit type vent made from a polyamide is in production. The vent has a low ratio of opening area of 15% or less becasue it is of slit type and further is not sufficient in chemical resistance, therefore, has limited applications. Moreover, the vent has low thermal resistance. These reasons make the vent unusable in metal molds for production of foamed resins. Also, because the polyamide resin is low in strength, it is very difficult to produce a screen type vent having a high ratio of opening area by the use of this resin.

The present inventors made extensive studies for development of a vent overcoming the above drawbacks of the conventional vents and excellent in chemical resistance, thermal resistance, releasability and corrosion resistance, etc.  As a result, it has been found out that the above object can be attained by using a PPS resin composition as a material for the intended vent.

The PPS resin used in the present invention is known as described in, for example, Japanese Patent Publication No. 3368/1970 and can be obtained by, for example, subjecting dichlorobenzene and sodium sulfide to condensation reaction.

The PPS resin composition used in the present invention refers to a blend of (a) the above PPS resin and (b) an inorganic fiber such as a glass fiber, a carbon fiber or the like, or an inorganic filler such as silica, titanium oxide, talc, calcium carbonate or the like or a high molecular compound such as a polyamide resin, a fluorine resin or the like.  The properties of the PPS resin are improved by this blending.

The screen type vent refers in the present specification to a vent having a gas-passing face of mesh type, of vents ordinarlly used in metal molds for production of sand molds for castings and also for production of foamed resins.  When a screen type vent uses a PPS resin composition as a material, the vent can be easily produced by injection molding.

As the materials for the mesh type vent, various heat resistant resins other than the PPS resin composition were also investigated.  How-ver, any vent for use in molds satisfying the object of the present invention could not be obtained as shown in Comparative Examples

0112018

which follow. That is, only by using a PPS resin composition, mesh type vents could be produced which are excellent in chemical resistance, thermal resistance, releasability and corrosion resistance, good in moldability and high in ratio of opening area.

Next, the present invention will be explained in more detail by way of Examples and Comparative Examples.

Example 1

As a metal mold for producing a mesh type vent of the present invention, there was used a metal mold currently being used by some manufacturers for injection molding of screen type vents of 12 mm diameter.

For enabling molding of a heat-resistant resin, to the metal mold were attached a device for heating the mold and a device for contrlling the temperature of the mold.

Using Ryton R-4 [trademark for à PPS resin composition containing 40% by weight (based on composition) of a glass fiber, manufactured by Phillips Petroleum Co., U.S.A.], mesh type vents were injection-molded in the above metal mold at a resin temperature of 320°C, an injection pressure of 1000 kg/cm$^2$ and a mold temperature of 110°C. Thereafter, holes each having 11.8 mm diameter were bored in a metal mold for use in production of sand molds for castings. The above produced screen type vents were driven into these holes.

In the resulting metal mold provided with the

0112018

Ryton R-4 made vents, sand molds for castings were blow-molded by using a binder for the cold box process (an urethane type binder). This blow molding was repeated 100 times, but disadvantageous phenomena such as clogging of the mesh and adherence of binder to the vent were not observed.

Comparative Example 1

Using commercially available brass-made vents each having the same shape as the vents of Example 1, sand molds were blow-molded in the same metal mold as used in Example 1, under the same conditions as used in Example 1. The binder and sand grains adhered to the brass vents after 50 to 60 times of blow molding.

Example 2

The same mesh type of vents as used in Example 1 were attached to a metal mold for use in foamed polystyrene production. Using a steam of 110° to 120°C, foamed polystyrene molding was conducted in this metal mold. Even after repetition of 500 times of foam molding, there was no leakage of polystyrene from the vents.

Comparative Example 2

Brass-made slit type vents currently being used generally were attached to the same metal mold as used in Example 2. Foamed polystyrene molding was conducted in this metal mold under the same conditions as used in Example 2. Almost all the vents caused mesh clogging after one time of foam molding.

Examples 3 and 4, Comparative Examples 3 to 5

Using the same metal mold for injection molding of screen type vents as used in Example 1, five kinds of mesh type vents were molded from Susteel FC (trademark for a composition of a PPS resin, with a carbon fiber and a fluorine resin, manufactured by Hodogaya Chemical Co., Ltd.), Susteel 22 (trademark for a composition of PPS resin and a polyamide resin manufactured by the same company), a PBT resin composition (trademark for a composition of a polybutylene terephthalate resin with 30% by weight of a glass fiber, manufactured by Dainippon Ink & Chemicals, Inc.), a Duracon resin composition (trademark for a composition of a polyacetal resin with 30% by weight of a glass fiber, manufactured by Polyplastic K.K., Japan) and a polycarbonate resin composition (a composition containing 30% by weight of a glass fiber). Using each kind of these vents, sand molds for castings were blow-molded in the same mold as used in Example 1, under the same conditions as used in Example 1. Similarly to vents made from Ryton R-4, vents made from Susteel FC and Susteel 22 gave good results. But, vents made from the PBT resin composition, the Duracon resin composition and the polycarbonate resin composition swelled due to a solvent contained in the binder for sands and some quantities of sand grains adhered to surfaces of vents.

WHAT IS CLAIMED IS:

1.      A mesh type vent for use in molds which is made from a polyphenylene sulfide resin composition.

2.      A mesh type vent for use in molds according to Claim 1, wherein the polyphenylene sulfide resin composition is a composition of a polyphenylene sulfide resin with at least one member selected from the group consisting of inorganic fibers, inorganic fillers and organic high molecular compounds.

3.      A mesh type vent for use in molds according to Claim 2, wherein the inorganic fibers are glass fibers, carbon fibers and other inorganic fibers.

4.      A mesh type vent for use in molds according to Claim 2, wherein the inorganic fillers are silica, titanium oxide, talc, calcium carbonate and other inorganic fillers.

5.      A mesh type vent for use in molds according to Claim 2, wherein the organic high molecular compounds are polyamides, fluorine resins and other high molecular compounds which can be mixed with and/or copolymerized with a polyphenylene sulfide resin.

6.      A mesh type vent for use in molds according to Claim 2, wherein the polyphenylene sulfide resin composition is a composition of a polyphenylene sulfide resin and a glass fiber.

7.      A mesh type vent for use in molds according to Claim 2, wherein the polyphenylene sulfide resin composition is a composition of a polyphenylene sulfide resin, a glass fiber, a carbon fiber and a fluorine resin.

8.      A mesh type vent for use in molds according to Claim 2, wherein the polyphenylene sulfide resin composition is a composition of polyphenylene sulfide resin and a polyamide resin.

9.      A method for employing a mesh type vent for use in molds according to Claim 1, said molds is a metal molds for use in production of sand molds for castings by a cold box process.

10.      A method for employing a mesh type vent for use in molds according to Claim 9, wherein the cold box process is a production process of sand molds for castings selected from the group consisting of the carbon dioxide process, the Iso-cure process and the Hardox process.

11.      A method for employing a mesh type vent for use in molds according to Claim 1, said molds is used for in production of a foamed resin.

# EUROPEAN SEARCH REPORT

**European Patent Office**

**0112018**

Application number

EP 83 30 6729

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-A-3 026 146 (G. ZIMMERMANN) * Claims 1, 5 * | 1-6,8 | B 22 C 7/06 B 22 C 9/10 B 22 C 9/12 |
| Y | DE-B-2 916 465 (G. ZIMMERMANN) * Column 2, lines 33-38 * | 1-6,8 | |
| A | EP-A-0 033 387 (G. ZIMMERMANN) * Abstract * | 1 | |
| A | Chemical Abstracts vol. 83, 7-14 July 1975, Columbus, Ohio, USA R.V. JONES et al. "Industry's need for reinforced thermoplastics", page 54, column 1, abstract no. 11574e & Proc., Annu. Conf., Reinf. Plast./Compos. Inst., Soc. Plast. Ind., vol. 30, no. 12B, 1975, 5 pages | 1 | |

**TECHNICAL FIELDS SEARCHED (Int. Cl. ³)**

B 22 C 7/00
B 22 C 9/00

The present search report has been drawn up for all claims

| Place of search BERLIN | Date of completion of the search 30-01-1984 | Examiner GOLDSCHMIDT G |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82